# EUROPEAN PATENT APPLICATION

(11) **EP 3 125 588 A1**
(43) Date of publication of application: **01.02.2017**
(21) Application number: 14887171.8
(22) Date of filing: 27.03.2014
(51) Int. Cl.: H04W 4/14, H04W 88/02

(54) **INFORMATION TRANSMITTING METHOD AND DEVICE AND INFORMATION RECEIVING METHOD AND DEVICE**

(71) Applicant: Yulong Computer Telecommunication Scientific (Shenzhen) Co. Ltd., Shenzhen, Guangdong 518057 (CN)
(72) Inventor: YANG, Fan, Shenzhen Guangdong 518057 (CN)
(74) Representative: DREISS Patentanwälte PartG mbB
(86) International application number: PCT/CN2014/074223
(87) International publication number: WO 2015/143676

(57) **Abstract**

Method for information transmitting/receiving and device therefor are provided. In one embodiment, an information transmitting method includes: selecting a target transmission mode from transmission modes for a to-be-transmitted short message according to a received selection command, wherein the transmission modes include a disappear-after-reading transmission mode, a regular direct-display transmission mode and/or a regular transmission mode; upon detecting that the target transmission mode is the disappear-after-reading transmission mode, adding a disappear-after-reading tag to the to-be-transmitted short message; and transmitting the to-be-transmitted short message added with the disappear-after-reading tag to the information receiving device, therefore the information receiving device deletes the content in the short message according to the disappear-after-reading tag thereof after the short message has been read. By means of the technical solutions of the present invention, the content in the short message is deleted directly after it has been read, which may improve the personal privacy safety. (Fig. 1)

## Description

### Field of the Invention

The present invention relates to the field of terminal technology, and in particular, to an information transmitting method, an information receiving method, an information transmitting device and an information receiving device.

### Background of the Invention

With the popularity of smart phones, people's requirements on the security and privacy of the mobile phones have become higher and higher, and as an important form of communication, short messages have privacy that is getting more and more attention of users.

At present, a regular short message received by a terminal (such as a mobile phone) is automatically stored in the mobile phone. With regard to a private short message, the user needs to click a "menu" to select a "delete" option to delete short message. For some mobile phones, the private short message will be moved into a dustbin after a deletion operation is executed, and the user further need to transfer from an inbox to the dustbin to carry out a deletion operation again, so as to completely delete the short message, thereby being troublesome; with regard to an instant message based on the regular short message, after the mobile phone receives the short message, the short message can be directly displayed on the mobile phone interface without being manually opened, and the sender cannot be seen, thereby belonging to an anonymous transmission form, after the instant message is read, an option "store the short message" or "close the dialog box" can be selected, at this time, if the option "store the short message" is not selected, the short message is directly deleted, the security of the instant message is improved as compared with the regular short message, but the receiver still can select to store the short message, thereby being likely to cause information leakage.

Therefore, how to further reinforce the privacy of the short message communication mode has become a technical problem to be solved urgently at present.

### Summary of the Invention

Just based on the above-mentioned problems, the present invention provides a new information transmitting technology, in which after a receiver reads a short message, the short message can be directly deleted when a short message reading interface is closed while not allowing storing the short message, so that the privacy of the short message is improved.

In view of this, according to an aspect of the present invention, provided is an information transmitting method, applied to a information transmitting device, including: selecting a target transmission mode from transmission modes for a to-be-transmitted short message according to a received selection command, wherein the transmission modes include a disappear-after-reading transmission mode, a regular direct-display(instant) transmission mode and/or a regular transmission mode; upon detecting that the target transmission mode is the disappear-after-reading transmission mode, adding a disappear-after-reading tag to the to-be-transmitted short message; and transmitting the to-be-transmitted short message added with the disappear-after-reading tag to an information receiving device, therefore the information receiving device deletes the content in the short message according to the disappear-after-reading tag thereof after the short message has been read.

In the technical solution, different transmission modes are selected for the short message according to the selection command, thereby reinforcing the flexibility and the interestingness of the transmission mode of the short message, meanwhile, if the disappear-after-reading transmission mode of the short message is selected, the disappear-after-reading tag is added in the short message, and the short message is transmitted in a disappear-after-reading mode; after the disappear-after-reading short message is received, the short message is directly displayed; and once a short message reading interface is closed, the short message will be directly deleted. As compared with the instant message in the prior art, no information storage function is provided, thereby preventing the leakage of the content in the short message and greatly improving the privacy of the short message.

In this case, the disappear-after-reading tag can be a special mark, for example: 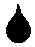 (flame, indicating disappear-after-reading), namely, when the disappear-after-reading tag is added in the short message, the " 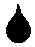 " is added to the first character position in the short message. Of course, those skilled in the art should understand that the disappear-after-reading tag and the adding position thereof in the short message have other forms, and are not used for specific limitation here.

In the above technical solution, preferably, upon detecting that the target transmission mode is the regular direct-display transmission mode, a regular direct-display(instant) tag is added to the to-be-transmitted short message; and the to-be-transmitted short message added with the regular direct-display tag is transmitted to the information receiving device, therefore the information receiving device stores or deletes the content in the short message according to the regular direct-display tag thereof after the short message has been read.

In the technical solution, the regular direct-display transmission mode is selected, then the regular direct-display tag is added in the short message, and the short message is transmitted in the form of a regular instant message; after the regular instant message is received, the short message is directly displayed, and options "store the information" and "close the dialog box" are provided; and after the regular instant message is read, storing or deleting the short message can be selected. Of course, the mode of adding the regular direct-display tag is the same as the mode of adding the disappear-after-reading tag.

In the above technical solution, preferably, before adding the disappear-after-reading tag to the to-be-transmitted short message, the information transmitting method further includes: determining whether the to-be-transmitted short message is a multimedia message; and when the to-be-transmitted short message is determined as a multimedia message, not allowing adding the disappear-after-reading tag to the to-be-transmitted short message, and otherwise, adding the disappear-after-reading tag to the to-be-transmitted short message.

In the technical solution, whether the short message is a multimedia message is judged so as to determine to add the disappear-after-reading tag in the short message or not, since the disappear-after-reading function is not supported for a multimedia message, thus when the short message is determined to be a multimedia message, the disappear-after-reading tag is not allowed to be added, and a prompt pops up to indicate that the multimedia message cannot be transmitted in the disappear-after-reading mode, or when the to-be-transmitted short message of the user is determined to be a multimedia message, the option of the disappear-after-reading transmission mode is canceled in the transmission modes, so as to avoid transmitting the multimedia message in the disappear-after-reading transmission mode.

In the above technical solution, preferably, the information transmitting method further includes: when the short message is determined as a multimedia message, prompting the user that the to-be-transmitted short message will be transmitted in the regular transmission mode.

In the technical solution, since the disappear-after-reading transmission mode is not supported for the multimedia message, when the to-be-transmitted short message is a multimedia message, the to-be-transmitted multimedia message will be transmitted in the regular transmission mode.

In the above technical solution, preferably, the information transmitting method further includes: after adding the disappear-after-reading tag or the regular direct-display tag to the to-be-transmitted short message, displaying the disappear-after-reading tag or the regular direct-display tag in a display interface of the to-be-transmitted short message.

In the technical solution, the disappear-after-reading tag or the regular direct-display tag is displayed in the display interface of the to-be-transmitted short message, so that the user can visually observe the transmission mode of the to-be-transmitted short message, in order to prompt the user that the short message will be transmitted in the disappear-after-reading or regular direct-display transmission mode.

According to a second aspect of the present invention, provided is an information receiving method, applied to an information receiving device, including: receiving a short message transmitted by an information transmitting device; determining whether the short message contains a disappear-after-reading tag; and when the short message contains the disappear-after-reading tag, after the short message is opened, deleting the content in the short message after reading according to a received closing command.

In the technical solution, whether the received short message contains the disappear-after-reading tag is judged, when the received short message contains the disappear-after-reading tag, the short message containing the disappear-after-reading tag is directly displayed, and when the command of closing a short message display interface is received, the short message containing the disappear-after-reading tag is directly deleted. As compared with the instant message in the prior art, no information storage function is provided, thereby preventing the leakage of the content in the short message and greatly improving the privacy of the short message.

In the above technical solution, preferably, the information receiving method further includes: when the short message does not contain the disappear-after-reading tag, determining whether the short message contains a regular direct-display tag; and when the short message contains the regular direct-display tag, after the short message is opened, storing or deleting the content in the short message according to a received storing or closing command.

In the technical solution, when the received short message does not contain the disappear-after-reading tag, whether the short message contains the regular direct-display tag still needs to be judged; when it is determined that the received short message contains the regular direct-display tag, the short message containing the regular direct-display tag is directly displayed; and after the instant message is read, options "store the information" and "close the dialog box" are provided, and thus storing or deleting the short message can be selected.

Of course, if the received short message does not contain the disappear-after-reading tag or the regular direct-display tag, it indicates that the short message is a regular short message, the short message needs to be clicked for reading, and the short message can be automatically stored.

In the above technical solution, preferably, the information receiving method further includes: displaying the received short message containing the disappear-after-reading tag and/or the regular direct-display tag, wherein when the short message is not closed, the short message is displayed in a first display style, and when the short message is closed, the short message is displayed in a second display style.

In the technical solution, the short message containing the disappear-after-reading tag and/or the regular direct-display tag is displayed in two styles when not being closed and when being closed, whether the short message is closed can be visually displayed, of course, when the regular instant message is stored, it is displayed in the display style of the regular short message, and when the regular instant message is not stored and the display interface is closed, it is displayed in the second display style.

When multiple regular instant messages and/or disappear-after-reading short messages are simultaneously received, whether the reading interface of each short message in the multiple short messages is closed can be distinguished by the display styles, that is, whether the short message is deleted is distinguished. If the reading interface is not closed, the user can continue to view the short message; and if the reading interface is closed, at this time, the short message is displayed in the second display style. When the short message is displayed in the second display style, even if the user clicks the short message, since the content in the short message has been deleted, the user cannot view the short message, including the sender of the short message, the transmission time and the content in the short message, etc.

In the above technical solution, preferably, the information receiving method further includes: setting the first display style and/or the second display style according to a received setting command.

In the technical solution, the first display style and the second display style can be freely set, thereby reinforcing the flexibility of the display style, for example: the first display style can be set as a message package style and the second display style is an empty envelope style; the first display style can also be set as an envelope style added with the disappear-after-reading tag or the regular direct-display tag, and the second display style is a torn envelope style. Of course, a lot of display modes are still available and are not listed one by one herein.

According to a third aspect of the present invention, a information transmitting device is provided, including: a selection unit, used for selecting a target transmission mode from transmission modes for a to-be-transmitted short message according to a selection command received, wherein the transmission modes include a disappear-after-reading transmission mode, a regular direct-display transmission mode and/or a regular transmission mode; a tag adding unit used for, upon detecting that the target transmission mode is the disappear-after-reading transmission mode, adding a disappear-after-reading tag to the to-be-transmitted short message; and a transmitting unit, used for transmitting the to-be-transmitted short message added with the disappear-after-reading tag to an information receiving device.

In the technical solution, different transmission modes are selected for the short message according to the selection command, thereby reinforcing the flexibility and the interestingness of the transmission mode of the short message, meanwhile, if the disappear-after-reading transmission mode of the short message is selected, the disappear-after-reading tag is added in the short message, and the short message is transmitted in a disappear-after-reading mode; after the disappear-after-reading short message is received, the short message is directly displayed; and once a short message reading interface is closed, the short message will be directly deleted. As compared with the instant message in the prior art, no information storage function is provided, thereby preventing the leakage of the content in the short message and greatly improving the privacy of the short message.

In this case, the disappear-after-reading tag can be a special mark, for example: 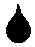 , namely, when the disappear-after-reading tag is added in the short message, the " 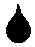 " is added to the first character position in the short message. Of course, those skilled in the art should understand that the disappear-after-reading tag and the adding position thereof in the short message have other forms, and are not used for specific limitation here.

In the above technical solution, preferably, the tag adding unit is further used for, upon detecting that the target transmission mode is the regular direct-display transmission mode, adding a regular direct-display tag to the to-be-transmitted short message; and the transmitting unit is further used for transmitting the to-be-transmitted short message added with the regular direct-display tag to the information receiving device.

In the technical solution, the regular direct-display transmission mode is selected, then the regular direct-display tag is added in the short message, and the short message is transmitted in the form of a regular instant message; after the regular instant message is received, the short message is directly displayed, and options "store the information" and "close the dialog box" are provided; and after the regular instant message is read, storing or deleting the short message can be selected. Of course, the mode of adding the regular direct-display tag is the same as the mode of adding the disappear-after-reading tag.

In the above technical solution, preferably, the tag adding unit further includes: a judging unit, used for judging whether the to-be-transmitted short message is a multimedia message; and a processing unit used for, when judging that the to-be-transmitted short message is a multimedia message, not allowing adding the disappear-after-reading tag to the to-be-transmitted short message, and otherwise, allowing adding the disappear-after-reading tag to the to-be-transmitted short message.

In the technical solution, whether the short message is a multimedia message is judged so as to determine to add the disappear-after-reading tag in the short message or not, since the disappear-after-reading function is not supported for a multimedia message, thus when the short message is determined to be a multimedia message, the disappear-after-reading tag is not allowed to be added, and a prompt pops up to indicate that the multimedia message cannot be transmitted in the disappear-after-reading mode, or when the to-be-transmitted short message of the user is determined to be a multimedia message, the option of the disappear-after-reading transmission mode is canceled in the transmission modes, so as to avoid transmitting the multimedia message in the disappear-after-reading transmission mode.

In the above technical solution, preferably, the information transmitting device further includes: a prompting unit used for, when judging that the short message is a multimedia message, prompting the user that the to-be-transmitted short message will be transmitted in the regular transmission mode.

In the technical solution, since the disappear-after-reading transmission mode is not supported for the multimedia message, when the to-be-transmitted short message is a multimedia message, the to-be-transmitted multimedia message will be transmitted in the regular transmission mode.

In the above technical solution, preferably, the information transmitting device further includes: a tag display unit used for, after adding the disappear-after-reading tag to the to-be-transmitted short message, displaying the disappear-after-reading tag in a display interface of the to-be-transmitted short message.

In the technical solution, the disappear-after-reading tag or the regular direct-display tag is displayed in the display interface of the to-be-transmitted short message, so that the user can visually display the transmission mode of the to-be-transmitted short message, in order to prompt the user that the short message will be transmitted in the disappear-after-reading or regular direct-display transmission mode.

According to a fourth aspect of the present invention, an information receiving device is provided, including: a receiving unit, used for receiving a short message transmitted by a information transmitting device; a judging unit, used for judging whether the short message contains a disappear-after-reading tag; and a processing unit used for, when the short message contains the disappear-after-reading tag, after the short message is opened, deleting the content in the short message after reading according to a received closing command.

In the technical solution, whether the short message contains the disappear-after-reading tag is judged, when the received short message contains the disappear-after-reading tag, the short message containing the disappear-after-reading tag is directly displayed, when the command of closing a short message display interface is received, the short message containing the disappear-after-reading tag is directly deleted, and as compared with the instant message in the prior art, no information storage function is provided, thereby preventing the leakage of the content in the short message and greatly improving the privacy of the short message. In the above technical solution, preferably, the judging unit is further used for: when the short message does not contain the disappear-after-reading tag, judging whether the short message contains a regular direct-display tag; and the processing unit is further used for: when the short message contains the regular direct-display tag, after the short message is opened, storing or deleting the content in the short message according to a received storage or closing command.

In the technical solution, when the received short message does not contain the disappear-after-reading tag, whether the short message contains the regular direct-display tag still needs to be judged; when it is determined that the received short message contains the regular direct-display tag, the short message containing the regular direct-display tag is directly displayed; and after the instant message is read, options "store the information" and "close the dialog box" are provided, and thus storing or deleting the short message can be selected.

Of course, if the received short message does not contain the disappear-after-reading tag or the regular direct-display tag, it indicates that the short message is a regular short message, the short message needs to be clicked for reading, and the short message can be automatically stored.

In the above technical solution, preferably, the information receiving device further includes: a display unit, used for displaying the received short message containing the disappear-after-reading tag and/or the regular direct-display tag, wherein when the short message is not closed, the short message is displayed in a first display style, and when the short message is closed, the short message is displayed in a second display style.

In the technical solution, the short message containing the disappear-after-reading tag and/or the regular direct-display tag is displayed in two styles when not being closed and when being closed, whether the short message is closed can be visually displayed, of course, when the regular instant message is stored, it is displayed in the display style of the regular short message, and when the regular instant message is not stored and the display interface is closed, it is displayed in the second display style.

When multiple regular instant messages and/or disappear-after-reading short messages are simultaneously received, whether the reading interface of each short message in the multiple short messages is closed can be distinguished by the display styles, that is, whether the short message is deleted is distinguished. If the reading interface is not closed, the user can continue to view the short message; and if the reading interface is closed, at this time, the short message is displayed in the second display style. When the short message is displayed in the second display style, even if the user clicks the short message, since the content in the short message has been deleted, the user cannot view the short message, including the sender of the short message, the transmission time and the content in the short message, etc.

In the above technical solution, preferably, the information receiving device further includes: a setting unit, used for setting the first display style and/or the second display style according to a received setting command.

In the technical solution, the first display style and the second display style can be freely set, thereby reinforcing the flexibility of the display style, for example: the first display style can be set as a message package style and the second display style is an empty envelope style; the first display style can also be set as an envelope style added with the disappear-after-reading tag or the regular direct-display tag, and the second display style is a torn envelope style. Of course, a lot of display modes are still available and are not listed one by one herein.

### Brief Description of the Drawings

Fig. 1 shows a schematic flowchart of an information transmitting method according to an embodiment of the present invention;
Fig. 2 shows a schematic flowchart of an information transmitting method according to another embodiment of the present invention;
Fig. 3 shows a schematic flowchart of an information receiving method according to an embodiment of the present invention;
Fig. 4 shows a schematic flowchart of an information receiving method according to another embodiment of the present invention;
Fig. 5 shows a schematic diagram of a structure of an information transmitting device according to an embodiment of the present invention;
Fig. 6 shows a schematic diagram of a structure of an information receiving device according to an embodiment of the present invention;
Fig. 7 shows a schematic diagram of a display interface of a disappear-after-reading short message according to an embodiment of the present invention;
Fig. 8 shows a schematic diagram of a display interface of a regular instant message according to an embodiment of the present invention.

### Detailed Description of the Embodiments

In order that the above objects, features and advantages of the present invention can be understood more clearly, a further detailed description of the present invention will be given below in combination with the accompany drawings and specific embodiments. It should be noted that embodiments of the present application and the features in the embodiments can be combined with each other without conflict.

A lot of specific details are described in the following description to fully understand the present invention, but the present invention can also be implemented in other forms different from what is described herein, and thus the protection scope of the present invention is not limited by the specific embodiments described below.

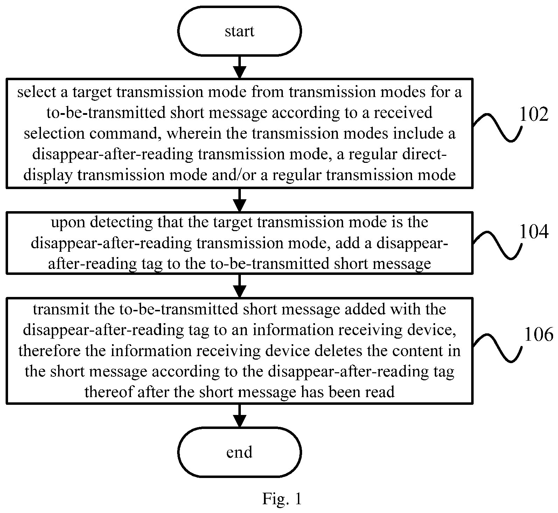

Fig. 1 shows a schematic flowchart of an information transmitting method according to an embodiment of the present invention.

As shown in Fig. 1, the information transmitting method according to the embodiment of the present invention is applied to a information transmitting device and includes: step 102, selecting a target transmission mode from transmission modes for a to-be-transmitted short message according to a received selection command, wherein the transmission modes include a disappear-after-reading transmission mode, a regular direct-display transmission mode and/or a regular transmission mode; step 104, upon detecting that the target transmission mode is the disappear-after-reading transmission mode, adding a disappear-after-reading tag to the to-be-transmitted short message; and step 106, transmitting the to-be-transmitted short message added with the disappear-after-reading tag to an information receiving device, therefore the information receiving device deletes the content in the short message according to the disappear-after-reading tag thereof after the short message has been read.

In the technical solution, different transmission modes are selected for the short message according to the selection command, thereby reinforcing the flexibility and the interestingness of the transmission mode of the short message, meanwhile, if the disappear-after-reading transmission mode of the short message is selected, the disappear-after-reading tag is added in the short message, and the short message is transmitted in a disappear-after-reading mode; after the disappear-after-reading short message is received, the short message is directly displayed; and once a short message reading interface is closed, the short message will be directly deleted. As compared with the instant message in the prior art, no information storage function is provided, thereby preventing the leakage of the content in the short message and greatly improving the privacy of the short message.

In this case, the disappear-after-reading tag can be a special mark, for example: 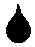 , namely, when the disappear-after-reading tag is added in the short message, the " 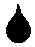 " is added to the first character position in the short message. Of course, those skilled in the art should understand that the disappear-after-reading tag and the adding position thereof in the short message have other forms, and are not used for specific limitation here.

In the above technical solution, preferably, upon detecting that the target transmission mode is the regular direct-display transmission mode, adding a regular direct-display tag to the to-be-transmitted short message; and transmitting the to-be-transmitted short message added with the regular direct-display tag to the information receiving device, therefore the information receiving device stores or deletes the content in the short message according to the regular direct-display tag thereof after the short message has been read.

In the technical solution, the regular direct-display transmission mode is selected, then the regular direct-display tag is added in the short message, and the short message is transmitted in the form of a regular instant message; after the regular instant message is received, the short message is directly displayed, and options "store the information" and "close the dialog box" are provided; and after the regular instant message is read, storing or deleting the short message can be selected. Of course, the mode of adding the regular direct-display tag is the same as the mode of adding the disappear-after-reading tag.

In the above technical solution, preferably, before adding the disappear-after-reading tag to the to-be-transmitted short message, the information transmitting method further includes: determining whether the to-be-transmitted short message is a multimedia message; and when the to-be-transmitted short message is determined as a multimedia message, not allowing adding the disappear-after-reading tag to the to-be-transmitted short message, and otherwise, adding the disappear-after-reading tag to the to-be-transmitted short message.

In the technical solution, whether the short message is a multimedia message is judged so as to determine to add the disappear-after-reading tag in the short message or not, since the disappear-after-reading function is not supported for a multimedia message, thus when the short message is determined to be a multimedia message, the disappear-after-reading tag is not allowed to be added, and a prompt pops up to indicate that the multimedia message cannot be transmitted in the disappear-after-reading mode, or when the to-be-transmitted short message of the user is determined to be a multimedia message, the option of the disappear-after-reading transmission mode is canceled in the transmission modes, so as to avoid transmitting the multimedia message in the disappear-after-reading transmission mode.

In the above technical solution, preferably, the information transmitting method further includes: when the short message is determined as a multimedia message, prompting the user that the to-be-transmitted short message will be transmitted in the regular transmission mode.

In the technical solution, since the disappear-after-reading transmission mode is not supported for the multimedia message, thus when the to-be-transmitted short message is a multimedia message, the to-be-transmitted multimedia message will be transmitted in the regular transmission mode.

In the above technical solution, preferably, the information transmitting method further includes: after adding the disappear-after-reading tag or the regular direct-display tag to the to-be-transmitted short message, displaying the disappear-after-reading tag or the regular direct-display tag in a display interface of the to-be-transmitted short message.

In the technical solution, the disappear-after-reading tag or the regular direct-display tag is displayed in the display interface of the to-be-transmitted short message, so that the user can visually display the transmission mode of the to-be-transmitted short message, in order to prompt the user that the short message will be transmitted in the disappear-after-reading or regular direct-display transmission mode.

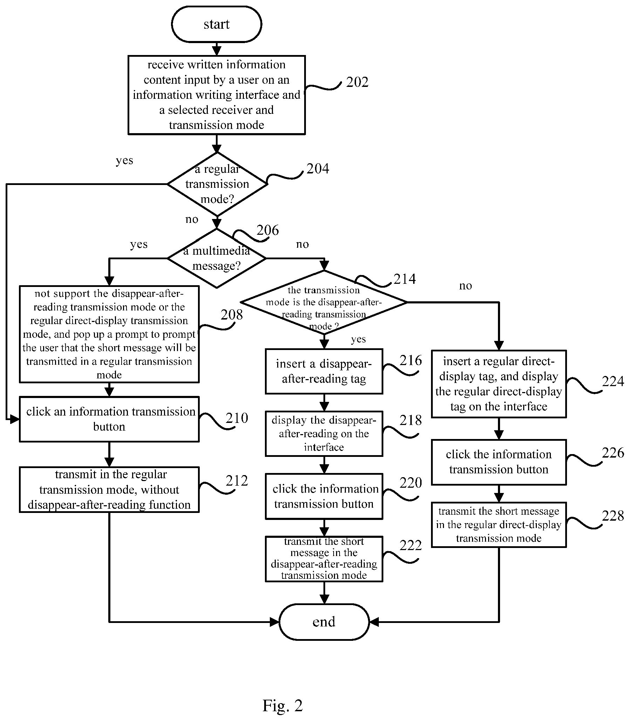

Fig. 2 shows a schematic flowchart of an information transmitting method according to another embodiment of the present invention.

As shown in Fig. 2, the specific flow of the information transmitting method according to the embodiment of the present invention is as follows:
step 202, receiving written information content input by a user on an information writing interface and a selected receiver and transmission mode, wherein transmission modes include a regular transmission mode, a disappear-after-reading transmission mode and a regular direct-display transmission mode;
step 204, judging whether the transmission mode is the regular transmission mode, when the judgment result is positive, executing step 210, and when the judgment result is negative, executing step 206;
step 206, judging whether a to-be-transmitted short message is a multimedia message, if so, executing step 208, and otherwise, executing step 204;
step 208, when the to-be-transmitted short message is a multimedia message, since the disappear-after-reading transmission mode is not supported for the multimedia message, propping up a prompt from the interface to prompt the user that the multimedia message will be transmitted in the regular transmission mode;
step 210, clicking an information transmission button;
step 212, transmitting the short message in the regular transmission mode, without disappear-after-reading function;
step 214, judging whether the transmission mode selected by the user is the disappear-after-reading transmission mode, when the judgment result is positive, executing step 216, and when the judgment result is negative, executing step 224; step 216, inserting a disappear-after-reading tag to the to-be-transmitted short message;
step 218, displaying the disappear-after-reading tag on the interface of the to-be-transmitted short message;
step 220, clicking the information transmission button;
step 222, transmitting the short message in the disappear-after-reading transmission mode;
step 224, inserting a regular direct-display tag in the to-be-transmitted short message, and displaying the regular direct-display tag on the interface;
step 226, clicking the information transmission button; and
step 228, transmitting the short message in the regular direct-display transmission mode.

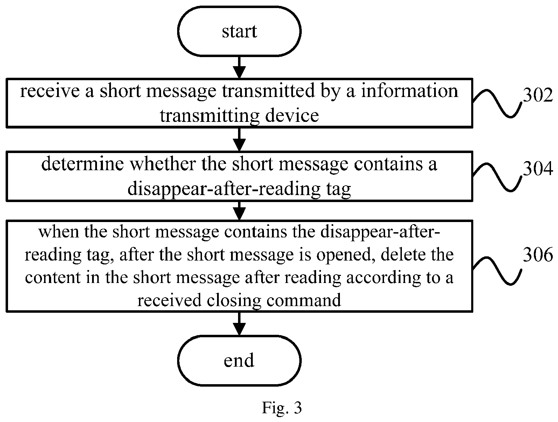

Fig. 3 shows a schematic flowchart of an information receiving method according to an embodiment of the present invention.

As shown in Fig. 3, the information receiving method according to the embodiment of the present invention is applied to an information receiving device and includes: step 302, receiving a short message transmitted by an information transmitting device; step 304, determining whether the short message contains a disappear-after-reading tag; and step 306, when the short message contains the disappear-after-reading tag, after the short message is opened, deleting the content in the short message after reading according to a received closing command.

In the technical solution, whether the received short message contains the disappear-after-reading tag is judged, when the received short message contains the disappear-after-reading tag, the short message containing the disappear-after-reading tag is directly displayed, when the command of closing a short message display interface is received, the short message containing the disappear-after-reading tag is directly deleted, and as compared with the instant message in the prior art, no information storage function is provided, thereby preventing the leakage of the content in the short message and greatly improving the privacy of the short message. In the above technical solution, preferably, the information receiving method further includes: when the short message does not contain the disappear-after-reading tag, determining whether the short message contains a regular direct-display tag; and when the short message contains the regular direct-display tag, after the short message is opened, storing or deleting the content in the short message according to a received storing or closing command.

In the technical solution, when the received short message does not contain the disappear-after-reading tag, whether the short message contains the regular direct-display tag still needs to be judged; when it is determined that the received short message contains the regular direct-display tag, the short message containing the regular direct-display tag is directly displayed; and after the instant message is read, options "store the information" and "close the dialog box" are provided, and thus storing or deleting the short message can be selected.

Of course, if the received short message does not contain the disappear-after-reading tag or the regular direct-display tag, it indicates that the short message is a regular short message, the short message needs to be clicked for reading, and the short message can be automatically stored.

In the above technical solution, preferably, the information receiving method further includes: displaying the received short message containing the disappear-after-reading tag and/or the regular direct-display tag, wherein when the short message is not closed, the short message is displayed in a first display style, and when the short message is closed, the short message is displayed in a second display style.

In the technical solution, the short message containing the disappear-after-reading tag and/or the regular direct-display tag is displayed in two styles when not being closed and when being closed, whether the short message is closed can be visually displayed, of course, when the regular instant message is stored, it is displayed in the display style of the regular short message, and when the regular instant message is not stored and the display interface is closed, it is displayed in the second display style.

When multiple regular instant messages and/or disappear-after-reading short messages are simultaneously received, whether the reading interface of each short message in the multiple short messages is closed can be distinguished by the display styles, that is, whether the short message is deleted is distinguished. If the reading interface is not closed, the user can continue to view the short message; and if the reading interface is closed, at this time, the short message is displayed in the second display style. When the short message is displayed in the second display style, even if the user clicks the short message, since the content in the short message has been deleted, the user cannot view the short message, including the sender of the short message, the transmission time and the content in the short message, etc.

In the above technical solution, preferably, the information receiving method further includes: setting the first display style and/or the second display style according to a received setting command.

In the technical solution, the first display style and the second display style can be freely set, thereby reinforcing the flexibility of the display style, for example: the first display style can be set as a message package style and the second display style is an empty envelope style; the first display style can also be set as an envelope style added with the disappear-after-reading tag or the regular direct-display tag, and the second display style is a torn envelope style. Of course, a lot of display modes are still available and are not listed one by one herein.

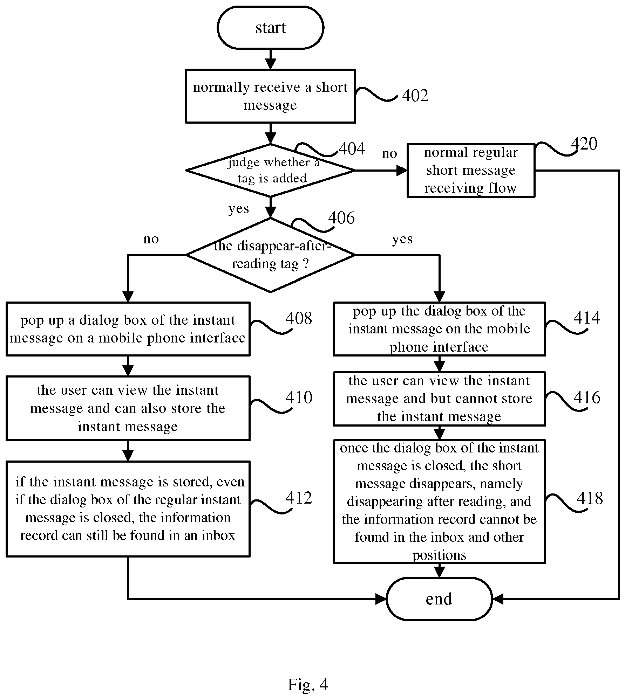

Fig. 4 shows a schematic flowchart of an information receiving method according to another embodiment of the present invention.

As shown in Fig. 4, a specific flow of the information receiving method according to the embodiment of the present invention is as follows:
step 402, a short message is normally received.
Step 404, whether a tag is inserted in the short message is judged, if the short message contains the tag, a step 406 is executed, and otherwise, a step 420 is executed.
Step 406, whether the tag in the short message is a disappear-after-reading tag is judged, if the tag is the disappear-after-reading tag, a step 414 is executed, and otherwise, a step 408 is executed.
Step 408, when the short message contains the tag and the tag is not the disappear-after-reading tag, the tag is a regular direct-display tag, then a dialog box of the instant message pops up on a mobile phone interface, and a user can directly view the content in the short message.
Step 410, the user can view the regular instant message and can also store the regular instant message.
Step 412, if the regular instant message is stored, even if the dialog box of the regular instant message is closed, the regular instant message can still be viewed in an inbox; and if the regular instant message is not stored, when the dialog box of the regular instant message is closed, the regular instant message will be directly deleted, is displayed in the inbox in a second display style and cannot be viewed again.
Step 414, when the tag contained in the short message is the disappear-after-reading tag, the dialog box of the instant message pops up on the mobile phone interface, and the user can directly view the content in the short message.
Step 416, the user can view the content in the short message, but cannot store the short message.
Step 418, once the dialog box of the instant message is closed, the short message disappears, namely disappearing after reading, and the short message is displayed in the inbox in the second display style and cannot be viewed again.
Step 420, when the short message contains no tag, it indicates that the short message is a normal regular short message, and then the short message is normally received.

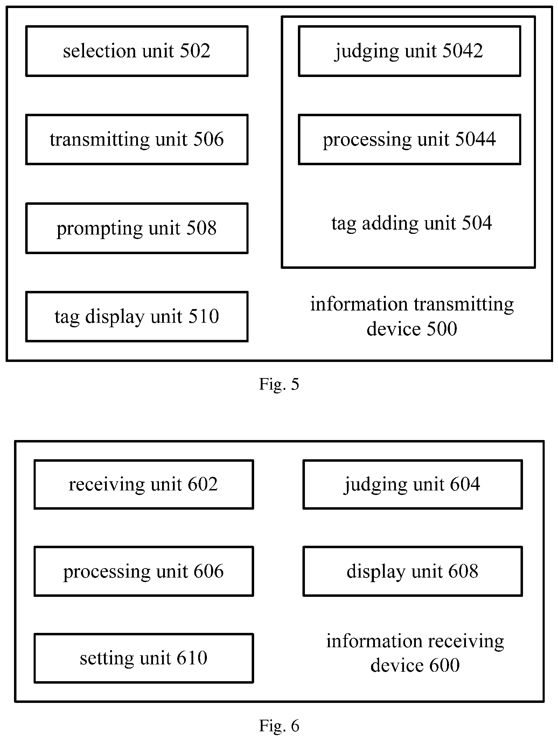

Fig. 5 shows a schematic diagram of a structure of an information transmitting device according to an embodiment of the present invention.

As shown in Fig. 5, the information transmitting device 500 according to the embodiment of the present invention includes: a selection unit 502, used for selecting a target transmission mode from transmission modes for a to-be-transmitted short message according to a selection command received, wherein the transmission modes include a disappear-after-reading transmission mode, a regular direct-display transmission mode and/or a regular transmission mode; a tag adding unit 504 used for, upon detecting that the target transmission mode is the disappear-after-reading transmission mode, adding a disappear-after-reading tag to the to-be-transmitted short message; and a transmitting unit 506, used for transmitting the to-be-transmitted short message added with the disappear-after-reading tag to an information receiving device.

In the technical solution, different transmission modes are selected for the short message according to the selection command, thereby reinforcing the flexibility and the interestingness of the transmission mode of the short message, meanwhile, if the disappear-after-reading transmission mode of the short message is selected, the disappear-after-reading tag is added in the short message, and the short message is transmitted in a disappear-after-reading mode; after the disappear-after-reading short message is received, the short message is directly displayed; and once a short message reading interface is closed, the short message will be directly deleted. As compared with the instant message in the prior art, no information storage function is provided, thereby preventing the leakage of the content in the short message and greatly improving the privacy of the short message.

In this case, the disappear-after-reading tag can be a special mark, for example: 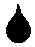 , namely, when the disappear-after-reading tag is added in the short message, the " 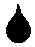 " is added to the first character position in the short message. Of course, those skilled in the art should understand that the disappear-after-reading tag and the adding position thereof in the short message have other forms, and are not used for specific limitation here.

In the above technical solution, preferably, the tag adding unit 504 is further used for, upon detecting that the target transmission mode is the regular direct-display transmission mode, adding a regular direct-display tag to the to-be-transmitted short message; and the transmitting unit 506 is further used for transmitting the to-be-transmitted short message added with the regular direct-display tag to the information receiving device.

In the technical solution, the regular direct-display transmission mode is selected, then the regular direct-display tag is added in the short message, and the short message is transmitted in the form of a regular instant message; after the regular instant message is received, the short message is directly displayed, and options "store the information" and "close the dialog box" are provided; and after the regular instant message is read, storing or deleting the short message can be selected. Of course, the mode of adding the regular direct-display tag is the same as the mode of adding the disappear-after-reading tag.

In the above technical solution, preferably, the tag adding unit 504 further includes: a judging unit 5042, used for judging whether the to-be-transmitted short message is a multimedia message; and a processing unit 5044 used for, when judging that the to-be-transmitted short message is a multimedia message, not allowing adding the disappear-after-reading tag to the to-be-transmitted short message, and otherwise, allowing adding the disappear-after-reading tag to the to-be-transmitted short message.

In the technical solution, whether the short message is a multimedia message is judged so as to determine to add the disappear-after-reading tag in the short message or not, since the disappear-after-reading function is not supported for a multimedia message, thus when the short message is determined to be a multimedia message, the disappear-after-reading tag is not allowed to be added, and a prompt pops up to indicate that the multimedia message cannot be transmitted in the disappear-after-reading mode, or when the to-be-transmitted short message of the user is determined to be a multimedia message, the option of the disappear-after-reading transmission mode is canceled in the transmission modes, so as to avoid transmitting the multimedia message in the disappear-after-reading transmission mode.

In the above technical solution, preferably, the information transmitting device further includes: a prompting unit 508 used for, when judging that the short message is a multimedia message, prompting the user that the to-be-transmitted short message will be transmitted in the regular transmission mode.

In the technical solution, since the disappear-after-reading transmission mode is not supported for the multimedia message, thus when the to-be-transmitted short message is a multimedia message, the to-be-transmitted multimedia message will be transmitted in the regular transmission mode.

In the above technical solution, preferably, the information transmitting device further includes: a tag display unit used for, after adding the disappear-after-reading tag to the to-be-transmitted short message, displaying the disappear-after-reading tag in a display interface of the to-be-transmitted short message.

In the technical solution, the disappear-after-reading tag or the regular direct-display tag is displayed in the display interface of the to-be-transmitted short message, so that the user can visually display the transmission mode of the to-be-transmitted short message, in order to prompt the user that the short message will be transmitted in the disappear-after-reading or regular direct-display transmission mode.

Fig. 6 shows a schematic diagram of a structure of an information receiving device according to an embodiment of the present invention.

As shown in Fig. 6, the information receiving device 600 according to the embodiment of the present invention includes: a receiving unit 602, used for receiving a short message transmitted by a information transmitting device 500; a judging unit 604, used for judging whether the short message contains a disappear-after-reading tag; and a processing unit 606 used for, when the short message contains the disappear-after-reading tag, after the short message is opened, deleting the content in the short message after reading according to a received closing command.

In the technical solution, whether the received short message contains the disappear-after-reading tag is judged, when the received short message contains the disappear-after-reading tag, the short message containing the disappear-after-reading tag is directly displayed, when the command of closing a short message display interface is received, the short message containing the disappear-after-reading tag is directly deleted, and as compared with the instant message in the prior art, no information storage function is provided.

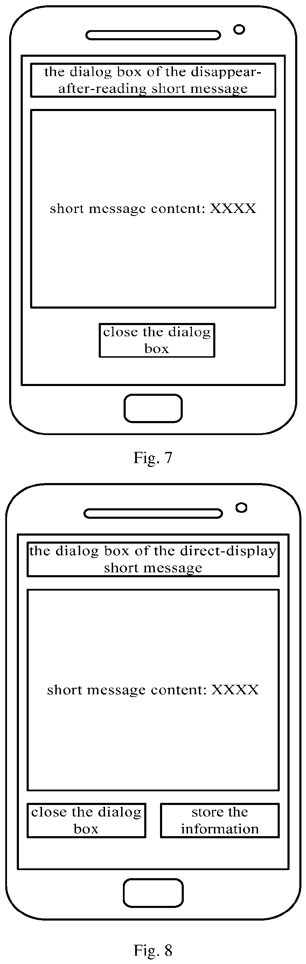

In this case, as shown in Fig. 7, no information storage function is provided in the display interface of the disappear-after-reading short message according to the embodiment of the present invention, thereby preventing the leakage of the content in the short message and greatly improving the privacy of the short message.

In the above technical solution, preferably, the judging unit 604 is further used for: when the short message does not contain the disappear-after-reading tag, judging whether the short message contains a regular direct-display tag; and the processing unit 606 is further used for: when the short message contains the regular direct-display tag, after the short message is opened, storing or deleting the content in the short message according to a received storage or closing command.

In the technical solution, when the received short message does not contain the disappear-after-reading tag, whether the short message contains the regular direct-display tag still needs to be judged; when it is determined that the received short message contains the regular direct-display tag, the short message containing the regular direct-display tag is directly displayed; and after the instant message is read, options "store the information" and "close the dialog box" are provided. In this case, as shown in Fig. 8, options "store the information" and "close the dialog box" option are provided in the display interface of the regular instant message according to the embodiment of the present invention, and thus storing or deleting the short message can be selected.

Of course, if the received short message does not contain the disappear-after-reading tag or the regular direct-display tag, it indicates that the short message is a regular short message, the short message needs to be clicked for reading, and the short message can be automatically stored.

In the above technical solution, preferably, the information receiving device further includes: a display unit 608, used for displaying the received short message containing the disappear-after-reading tag and/or the regular direct-display tag, wherein when the short message is not closed, the short message is displayed in a first display style, and when the short message is closed, the short message is displayed in a second display style.

In the technical solution, the short message containing the disappear-after-reading tag and/or the regular direct-display tag is displayed in two styles when not being closed and when being closed, whether the short message is closed can be visually displayed, of course, when the regular instant message is stored, it is displayed in the display style of the regular short message, and when the regular instant message is not stored and the display interface is closed, it is displayed in the second display style.

When multiple regular instant messages and/or disappear-after-reading short messages are simultaneously received, whether the reading interface of each short message in the multiple short messages is closed can be distinguished by the display styles, that is, whether the short message is deleted is distinguished. If the reading interface is not closed, the user can continue to view the short message; and if the reading interface is closed, at this time, the short message is displayed in the second display style. When the short message is displayed in the second display style, even if the user clicks the short message, since the content in the short message has been deleted, the user cannot view the short message, including the sender of the short message, the transmission time and the content in the short message, etc.

In the above technical solution, preferably, the information receiving device further includes: a setting unit 610, used for setting the first display style and/or the second display style according to a received setting command.

In the technical solution, the first display style and the second display style can be freely set, thereby reinforcing the flexibility of the display style, for example: the first display style can be set as a message package style and the second display style is an empty envelope style; the first display style can also be set as an envelope style added with the disappear-after-reading tag or the regular direct-display tag, and the second display style is a torn envelope style. Of course, a lot of display modes are still available and are not listed one by one herein.

The technical solutions of the present invention have been illustrated above in detail in combination with the accompany drawings. By means of the technical solutions of the present invention, the short message transmission mode can be selected flexibly, when the short message is transmitted in the disappear-after-reading mode, after the short message reading interface is closed, the short message is directly deleted, and the short message cannot be stored, so the privacy of the short message is improved.

According to the embodiment of the present invention, a program product stored on a nonvolatile machine-readable medium is further provided, for information transmission in a terminal, and the program product includes a machine executable instruction used for causing a computer system to execute the following steps: selecting a target transmission mode from transmission modes for a to-be-transmitted short message according to a selection command received, wherein the transmission modes include a disappear-after-reading transmission mode, a regular direct-display transmission mode and/or a regular transmission mode; upon detecting that the target transmission mode is the disappear-after-reading transmission mode, adding a disappear-after-reading tag to the to-be-transmitted short message; and transmitting the to-be-transmitted short message added with the disappear-after-reading tag to the information receiving device, thus allowing the information receiving device to delete the content in the short message after reading according to the disappear-after-reading tag in the received short message.

According to the embodiment of the present invention, a nonvolatile machine-readable medium is further provided, which stores a program product for information transmission in a terminal, and the program product includes a machine executable instruction used for causing a computer system to execute the following steps: selecting a target transmission mode from transmission modes for a to-be-transmitted short message according to a selection command received, wherein the transmission modes include a disappear-after-reading transmission mode, a regular direct-display transmission mode and/or a regular transmission mode; upon detecting that the target transmission mode is the disappear-after-reading transmission mode, adding a disappear-after-reading tag to the to-be-transmitted short message; and transmitting the to-be-transmitted short message added with the disappear-after-reading tag to the information receiving device, thus allowing the information receiving device to delete the content in the short message after reading according to the disappear-after-reading tag in the received short message. According to the embodiment of the present invention, a machine readable program is further provided, and the program causes a machine to execute the information transmitting method in any above technical solution.

According to the embodiment of the present invention, a storage medium storing a machine readable program is further provided, wherein the machine readable program causes a machine to execute the information transmitting method in any above technical solution.

According to the embodiment of the present invention, a program product stored on a nonvolatile machine-readable medium is further provided, for information reception in a terminal, and the program product includes a machine executable instruction used for causing a computer system to execute the following steps: receiving a short message transmitted by a information transmitting device; judging whether the short message contains a disappear-after-reading tag; and when the short message contains the disappear-after-reading tag, after the short message is opened, deleting the content in the short message after reading according to a received closing command. According to the embodiment of the present invention, a nonvolatile machine-readable medium is further provided, which stores a program product for information reception in a terminal, and the program product includes a machine executable instruction used for causing a computer system to execute the following steps: receiving a short message transmitted by a information transmitting device; judging whether the short message contains a disappear-after-reading tag; and when the short message contains the disappear-after-reading tag, after the short message is opened, deleting the content in the short message after reading according to a received closing command.

According to the embodiment of the present invention, a machine readable program is further provided, and the program causes a machine to execute the information receiving method in any above technical solution.

According to the embodiment of the present invention, a storage medium storing a machine readable program is further provided, wherein the machine readable program causes a machine to execute the information receiving method in any above technical solution.

The foregoing descriptions are merely preferred embodiments of the present invention, rather than limiting the present invention, and for those skilled in the art, the present invention can have a variety of variations and modifications. Any modifications, equivalent substitutions, improvements or the like made within the spirit and principle of the present invention shall all fall into the protection scope of the present invention.

## Claims

1. An information transmitting method, applied to an information transmitting device, comprising:
selecting a target transmission mode from transmission modes for a to-be-transmitted short message according to a received selection command, wherein the transmission modes comprise a disappear-after-reading transmission mode, a regular direct-display transmission mode and/or a regular transmission mode;
upon detecting that the target transmission mode is the disappear-after-reading transmission mode, adding a disappear-after-reading tag to the to-be-transmitted short message; and
transmitting the to-be-transmitted short message added with the disappear-after-reading tag to an information receiving device, therefore the information receiving device deletes the content in the short message according to the disappear-after-reading tag thereof after the short message has been read.

2. The information transmitting method of claim 1, wherein
upon detecting that the target transmission mode is the regular direct-display transmission mode, adding a regular direct-display tag to the to-be-transmitted short message; and
transmitting the to-be-transmitted short message added with the regular direct-display tag to the information receiving device, therefore the information receiving device stores or deletes the content in the short message according to the regular direct-display tag thereof after the short message has been read.

3. The information transmitting method of claim 1, wherein before adding the disappear-after-reading tag to the to-be-transmitted short message, the information transmitting method further comprises:
determining whether the to-be-transmitted short message is a multimedia message; and
not allowing adding the disappear-after-reading tag to the to-be-transmitted short message when the to-be-transmitted short message is determined as a multimedia message, and otherwise, adding the disappear-after-reading tag to the to-be-transmitted short message.

4. The information transmitting method of claim 3, further comprising:
prompting the user that the to-be-transmitted short message will be transmitted in the regular transmission mode when the to-be-transmitted short message is determined as a multimedia message.

5. The information transmitting method of any one of claims 2-4, further comprising:
after adding the disappear-after-reading tag or the regular direct-display tag to the to-be-transmitted short message, displaying the disappear-after-reading tag or the regular direct-display tag in a display interface of the to-be-transmitted short message.

6. An information receiving method, applied to an information receiving device, comprising:
receiving a short message transmitted by an information transmitting device;
determining whether the short message contains a disappear-after-reading tag; and
when the short message contains the disappear-after-reading tag, after the short message is opened, deleting the content in the short message after reading according to a received closing command.

7. The information receiving method of claim 6, further comprising:
when the short message does not contain the disappear-after-reading tag, determining whether the short message contains a regular direct-display tag; and
when the short message contains the regular direct-display tag, after the short message is opened, storing or deleting the content in the short message according to a received storing or closing command.

8. The information receiving method of claim 7, further comprising:
displaying the received short message containing the disappear-after-reading tag and/or the regular direct-display tag, wherein when the short message is not closed,
the short message is displayed in a first display style, and when the short message is closed, the short message is displayed in a second display style.

9. The information receiving method of claim 8, further comprising:
setting the first display style and/or the second display style according to a received setting command.

10. An information transmitting device, comprising:
a selection unit, used for selecting a target transmission mode from transmission modes for a to-be-transmitted short message according to a received selection command, wherein the transmission modes comprise a disappear-after-reading transmission mode, a regular direct-display transmission mode and/or a regular transmission mode;
a tag adding unit used for, upon detecting that the target transmission mode is the disappear-after-reading transmission mode, adding a disappear-after-reading tag to the to-be-transmitted short message; and
a transmitting unit, used for transmitting the to-be-transmitted short message added with the disappear-after-reading tag to an information receiving device.

11. The information transmitting device of claim 10, wherein
the tag adding unit is further used for:
upon detecting that the target transmission mode is the regular direct-display transmission mode, adding a regular direct-display tag to the to-be-transmitted short message; and
the transmitting unit is further used for:
transmitting the to-be-transmitted short message added with the regular direct-display tag to the information receiving device.

12. The information transmitting device of claim 10, wherein the tag adding unit further comprises:
a judging unit, used for judging whether the to-be-transmitted short message is a multimedia message; and
a processing unit used for, when judging that the to-be-transmitted short message is a multimedia message, not allowing adding the disappear-after-reading tag to the to-be-transmitted short message, and otherwise, allowing adding the disappear-after-reading tag to the to-be-transmitted short message.

13. The information transmitting device of claim 10, further comprising:
a prompting unit used for, when judging that the short message is a multimedia message, prompting the user that the to-be-transmitted short message will be transmitted in the regular transmission mode.

14. The information transmitting device of any one of claims 11-13, further comprising:
a tag display unit used for, after adding the disappear-after-reading tag or the regular direct-display tag to the to-be-transmitted short message, displaying the disappear-after-reading tag or the regular direct-display tag in a display interface of the to-be-transmitted short message.

15. An information receiving device, comprising:
a receiving unit, used for receiving a short message transmitted by an information transmitting device;
a judging unit, used for judging whether the short message contains a disappear-after-reading tag; and
a processing unit used for, when the short message contains the disappear-after-reading tag, after the short message is opened, deleting the content in the short message after reading according to a received closing command.

16. The information receiving device of claim 15, wherein
the judging unit is further used for:
when the short message does not contain the disappear-after-reading tag, judging whether the short message contains a regular direct-display tag; and
the processing unit is further used for:
when the short message contains the regular direct-display tag, after the short message is opened, storing or deleting the content in the short message according to a received storing or closing command.

17. The information receiving device of claim 16, further comprising:
a display unit, used for displaying the received short message containing the disappear-after-reading tag and/or the regular direct-display tag, wherein when the short message is not closed, the short message is displayed in a first display style, and when the short message is closed, the short message is displayed in a second display style.

18. The information receiving device of claim 17, further comprising:
a setting unit, used for setting the first display style and/or the second display style according to a received setting command.
